# EUROPEAN PATENT SPECIFICATION

(11) **EP 1 972 161 B1**
(45) Date of publication and mention of the grant of the patent: **13.10.2010**
(21) Application number: 06848305.6
(22) Date of filing: 28.12.2006
(51) Int. Cl.: H04W 4/22, H04W 64/00, H04W 88/06

(54) **A method and apparatus for routing emergency calls in a VoIP system**
Verfahren und Vorrichtung zum Routen von Notrufen in einem VoIP-System
Procédé et appareil d'acheminement d'appels d'urgence dans un système VoIP

(30) Priority: 03.01.2006 US 755926 P; 08.12.2006 US 608554
(43) Date of publication of application: 24.09.2008
(73) Proprietor: Sony Ericsson Mobile Communications AB, 221 88 Lund (SE)
(72) Inventor: BLOEBAUM, Leland, Scott, Cary, NC 27519 (US); HOMILLER, Daniel, Cary, NC 27513 (US); CAMP, William, Jr., Chapel Hill, NC 27514 (US)
(74) Representative: HOFFMANN EITLE
(86) International application number: PCT/US2006/049527
(87) International publication number: WO 2007/081574

(56) References cited:
- WO-A-2005/112488
- US-A1- 2005 213 716

## Description

### BACKGROUND OF THE INVENTION

The present invention relates to converged cellular and wireless broadband networks, and particularly relates to routing emergency calls in converged networks.

The convergence of cellular and wireless broadband networks allows subscribers to move between the networks with seamless voice and data session continuity, just as subscribers move between cells within a cellular network. Wireless network convergence effectively creates a dual radio access network. When it is efficient to route information such as data or voice over a cellular network, a mobile device utilizes the cellular network for communication. Conversely, when it is more efficient to route information over a wireless broadband network, the mobile device utilizes the wireless broadband network for communication.

One issue relating to the convergence of cellular and wireless broadband networks is the routing of emergency calls to the appropriate local emergency personnel. Various governments require communication service providers to support emergency calls made from cellular handsets, e.g., the E-911 mandate issued by the Federal Communications Commission (FCC) in the United States. Additionally, the FCC will require Voice-over-IP (VoIP) service providers to comply with the E-911 mandate in the near future. For example, VoIP providers will be required to deliver all 911 calls to the customer's local emergency operator and provide emergency operators with the call back number and location information of their customers.

Location-based services are widely used in cellular networks for identifying caller location when handling emergency calls placed by cellular handsets. For example, device-centric technologies such as the Global Positioning System (GPS) can pinpoint the location of a mobile device to an accuracy of ten meters or less. Network-assisted technologies such as assisted-GPS (AGPS) for Code Division Multiple Access (CDMA) cellular networks and Enhanced Observed Time Difference (EOTD) for Global System for Mobile communications (GSM) networks can pinpoint the location of a mobile device to an accuracy of one hundred meters or less.

However, location identification technology for mobile devices that access wireless broadband networks is less mature. Further, the nature of broadband communication, e.g., the use of Internet Protocol (IP) bearers for communicating between remote devices, removes all information associated with the location of a caller. As such, the convergence of cellular and wireless broadband networks presents a new challenge for identifying the location of mobile wireless devices when the devices communicate over a wireless broadband network. For example, as a mobile wireless device seamlessly transitions from a cellular network to a wireless broadband network, the device may no longer be capable of determining and/or communicating its position when connected to the wireless broadband network. VoIP service providers face a particularly daunting task if mandated to support E-911 for mobile devices placing VoIP calls using wireless broadband access technology.

US 2005/0213716 A1 discloses a voice over internet protocol 911 location service wherein a 911 call from a mobile VoIP device is routed directly to the correct public safety answer point via dedicated trunks, together with correct location information and call back number. In this document it is presumed that location information can always be acquired. It discloses no alternative in the event it cannot be acquired.

WO 2005/112488 A relates to identifying an emergency call in a wireless local area network.

The present invention is defined in claims 1, 7 and 13. Advantageous embodiments of the present invention are given in the dependent claims.

### SUMMARY OF THE INVENTION

The methods and apparatuses taught herein provide a method of routing emergency calls originated from mobile wireless devices in a Voice-over-IP (VoIP) system. In one example, the method comprises receiving incoming emergency calls originated from dual-mode mobile devices connected to the VoIP system through wireless access points (WAPs), determining locations associated with the incoming emergency calls, and redirecting callers to a cellular network. Corresponding to the above emergency call routing method, a complementary VoIP system comprises a call processing server configured to receive incoming emergency calls originated from dual-mode mobile devices connected to the VoIP system through WAPs. The call processing server is further configured to determine locations associated with the incoming emergency calls, and redirect callers to a cellular network.

Several embodiments described herein enable VoIP systems to acquire location information associated with mobile wireless devices accessing VoIP systems and to use the acquired location information to route emergency calls to appropriate emergency answering points (EAPs). In one example, WAP identifiers are mapped to EAPs. As such, when an incoming emergency call is received from an originating WAP, an EAP relating to the originating WAP is identified and the emergency call is directed to the identified EAP.

In another example, an incoming emergency call originated from a mobile wireless device connected to a VoIP system through a WAP is received by the VoIP system. Location information associated with the mobile wireless device is acquired from the mobile wireless device and the emergency call is directed to an EAP that services a geographic area corresponding to the location information acquired from the mobile wireless device.

In yet another example, an incoming emergency call originated from a mobile wireless device connected to a VoIP system through a WAP is received by the VoIP system. Location information derived by a device in-range of the mobile wireless device is acquired. The emergency call is directed to an EAP that services a geographic area corresponding to the location information acquired from the in-range device.

### BRIEF DE SCRIPTION OF THE DRAWINGS

FIG. 1 is a block diagram of an embodiment of a Voice-over-IP (VoIP) system.
FIG. 2 is a logic flow diagram of an embodiment of processing logic for identifying wireless access points to a VoIP system.
FIG. 3 is a logic flow diagram of an embodiment of processing logic for relating wireless access points to emergency answering points.
FIG. 4 is a block diagram of an embodiment of a database included in or associated with the VoIP system of Figure 1.
FIG. 5 is a block diagram of an embodiment of a VoIP system that acquires location information from a device in-range of a mobile wireless device.
FIG. 6 is a logic flow diagram of an embodiment of processing logic for providing a wireless access point identifier to a VoIP system during an emergency call.
FIG. 7 is a logic flow diagram of one embodiment of processing logic for routing emergency calls in a VoIP system.
FIG. 8 is a logic flow diagram of an embodiment of processing logic for providing mobile wireless device location information to a VoIP system during an emergency call.
FIG. 9 is a logic flow diagram of an embodiment of processing logic for providing location information associated with a mobile wireless device to a VoIP system during an emergency call.
FIG. 10 is a logic flow diagram of another embodiment of processing logic for routing emergency calls in a VoIP system.
FIG. 11 is a logic flow diagram of yet another embodiment of processing logic for routing emergency calls in a VoIP system.
FIG. 12 is a logic flow diagram of an embodiment of processing logic for redirecting emergency calls received by a VoIP system over a cellular network.
FIG. 13 is a logic flow diagram of an embodiment of processing logic for redirecting an emergency call by a dual-mode mobile device over a cellular network.

### DETAILED DESCRIPTION OF THE INVENTION

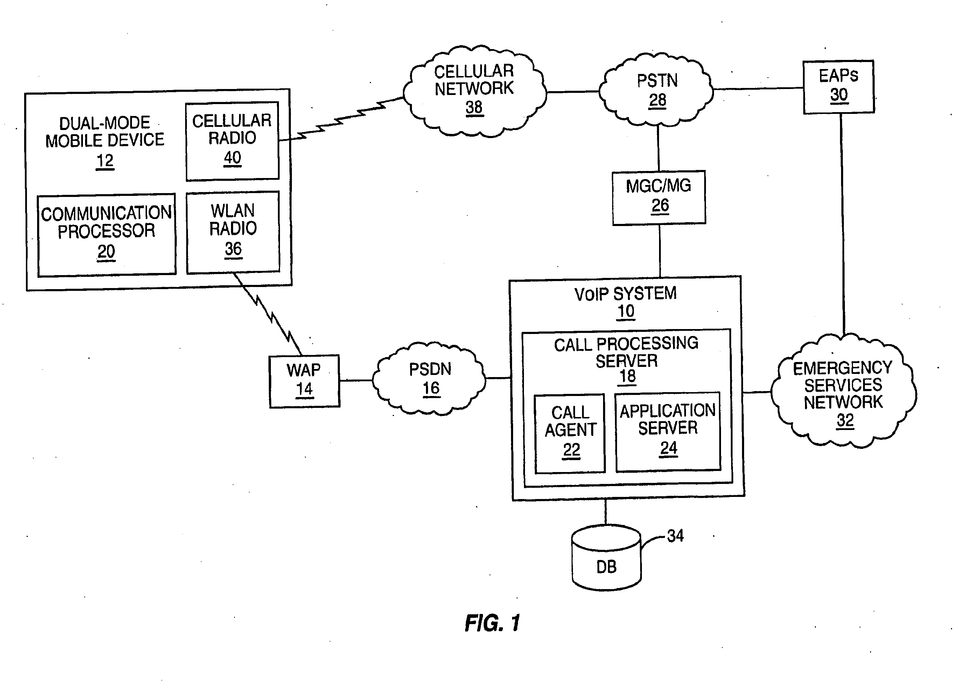

Figure 1 illustrates an embodiment of a Voice-over-IP (VoIP) system 10 that provides packet-based voice and data services to mobile wireless devices such as a dual-mode mobile communication device 12. The dual-mode mobile device 12 gains access to the VoIP system 10 via a Wireless Access Point (WAP) 14, e.g., an IEEE 802.11 (WiFi), IEEE 802.16 (WiMax), or IEEE 802.20 (Mobile Broadband Wireless Access) compatible WAP. The dual-mode mobile device 12 is directly or indirectly coupled to the VoIP system 10, e.g., through a Packet-Switched Data Network (PSDN) 16 such as the Internet. The VoIP system 10 comprises a call processing server 18 for managing VoIP connections traversing the VoIP system 10, including emergency calls.

The dual-mode mobile device 12 and the VoIP system 10 communicate both control information and packet-based communication data. To establish and control packet-based calls, the dual-mode mobile device 12 and the VoIP system 10 use a signaling protocol, e.g., Session Initiation Protocol (SIP) or H.323. For example, the call processing server 18 of the VoIP system 10 and a communication processor 20 of the dual-mode mobile device 12 use SIP in conjunction with client code such as Java to control handling of emergency calls initiated by the device 12.

The communication processor 20 manages network communication for the dual-mode mobile device 12, including establishing and maintaining communication channels, initiating and managing calls, and acquiring the location of the dual-mode mobile device 12. The communication processor 20 may comprise one or more general or special purpose microprocessors, digital signal processors, application specific integrated circuits, field programmable gate arrays, and/or other types of digital processing circuits, configured according to computer program instructions implemented in software (or firmware).

Likewise, the call processing server 18 manages packet-based communication for the VoIP system 10. The call processing server 18 comprises hardware and/or software and can be deployed as a single server, cluster of servers, or a server farm having distributed functionality. The call processing server 18 manages device communication, maintains various mappings and translations, and opens and closes communication channels between devices. For example, the call processing server 18 includes a call agent 22 for providing VoIP call signaling and control functions. The call agent 22 manages signaling and control flows associated with devices that access the VoIP system 10, e.g., by originating, terminating or forwarding calls. In a non-limiting example, the call agent 22 may include a SIP server (not shown) for providing SIP call signaling and control functions, e.g., by routing and forwarding SIP requests.

Further, the call processing server 18 includes an application server 24 for executing one or more applications or services not managed by the call agent 22, e.g. voice mail, conference calling, and emergency call handling. The call processing server 18 interfaces with a media gateway controller / media gateway (MGC/MG) 26. The MGC/MG 26 contains call control logic and hardware for interfacing with the Public-Switched Telephone Network (PSTN) 28. As such, the call processing server 18 gains access to the PSTN 28 via the MGC/MG 26.

As part of managing packet-based connections in the VoIP system 10, the call processing server 18 processes emergency calls received from various devices connected to the system 10, including mobile wireless devices such as the dual-mode mobile device 12. Emergency calls received by the VoIP system 10 may include proprietary emergency voice calls, 911 emergency voice calls, emergency text messages, emergency instant messages or the like. The call processing server 18 routes received emergency calls to Emergency Answering Point (EAPs) 30, i.e., designated statewide default answering points such as Public Service Answering Points (PSAPs), appropriate local emergency authorities or other emergency answering points or proprietary emergency answering points such as Onstar. To route an emergency call to an appropriate EAP, the call processing server 18 acquires information associated the location of the packet-based call, e.g., geospacial or civic location information such as latitude, longitude, altitude, street address, phone number, building name, etc. The call processing server 18 uses such location information to identify an appropriate EAP for receiving a particular emergency call.

The VoIP system 10 routes emergency calls to the EAPs 30 via either the PSTN 28 or an emergency services network 32 such as the wireline E911 network or a proprietary emergency call handling network capable of routing emergency calls and related information to the EAPs 30. To route an emergency call via the PSTN 28, the call processing server 18 uses location information associated with the call to identify an address of an appropriate EAP and then forwards the call to the EAP address over the PSTN 28 via the MGC/MG 26. When routing calls via the emergency services network 32, the call processing server 18 forwards the emergency call along with acquired location information to the emergency services network 32 directly via a gateway (not shown) or indirectly via the PSDN 16 or the FSTN 28. The emergency services network 32 uses the location information to identify an address of an appropriate EAP for responding to the emergency call.

Several embodiments are described herein that enable the VoIP system 10 to acquire location information associated with mobile wireless devices accessing the system 10 and to use the acquired location information to route emergency calls to an appropriate EAP. In one embodiment, the call processing server 18 populates and manages a database 34 that relates WAPs to the EAPs 30 using location information associated with mobile wireless devices. Particularly, the call processing server 18 uses location information associated with mobile wireless devices as an approximation of WAP location and relates one or more of the EAPs 30 to particular WAPs using the location information. Thus, when the VoIP system 10 receives an emergency call from a known WAP, i.e., a WAP having an entry in the database, the call processing server 18 identifies an EAP associated with the WAP and routes the emergency call to the identified EAP.

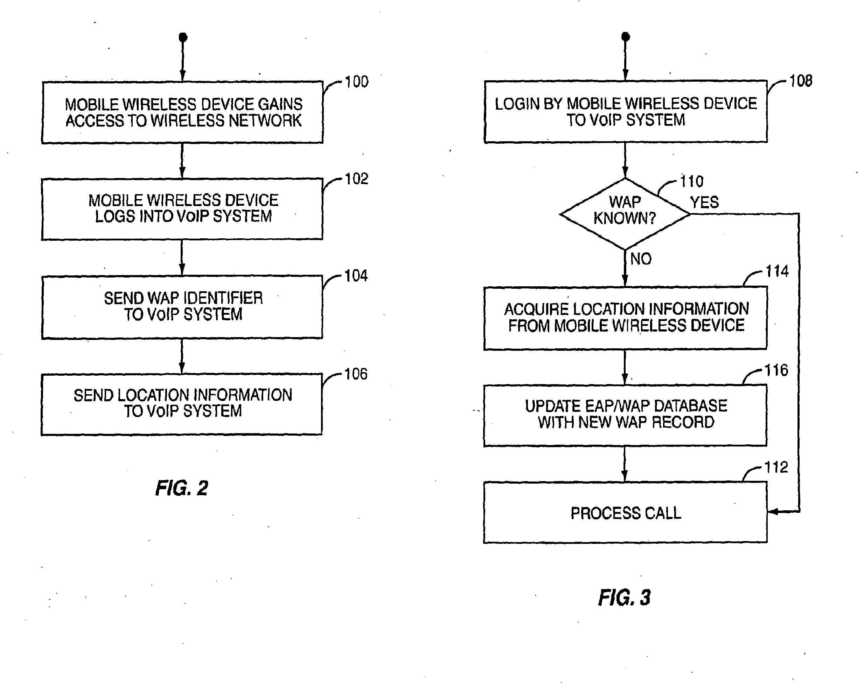

Figure 2 illustrates an embodiment of processing logic for identifying WAPs and providing location information associated with identified WAPs to the VoIP system 10. Prior to connecting to the VoIP system 10, a mobile wireless device gains wireless broadband access, e.g. to a wireless Local Area Network (WLAN) (Step 100). For example, the dual-mode mobile device 12 gains wireless broadband access via the WAP 14 using a WLAN radio 36 included in the device 12. The WAP 14 implements a network access authentication procedure for determining whether the dual-mode mobile device 12 is an authorized device.

After gaining access to a wireless broadband network, the mobile wireless device logs into or is otherwise authenticated by the VoIP system 10 (Step 102). After authentication is completed, or alternatively, as part of the authentication process, the mobile wireless device sends to the VoIP system 10 an identifier associated with the originating WAP, i.e., the WAP through which the device gains access to the VoIP system 10 (Step 104). For example, the dual-mode mobile device 12 provides an identifier associated with the originating WAP 14. Each identifier uniquely identifies a particular WAP to the VoIP system 10, e.g., a media access control (MAC) address, a service set identifier (SSID), or an internet protocol (IP) address. Upon request from the VoIP system 10 or automatically, the mobile wireless device sends location information associated with the mobile device to the VoIP system 10 (Step 106).

Figure 3 illustrates an embodiment of processing logic for populating the database 34 with WAP information provided by mobile wireless devices. When a mobile wireless device accesses the VoIP system 10 via a wireless broadband connection, e.g., during non-emergency calls, the device logs into or otherwise authenticates itself to the VoIP system 10 (Step 108). As part of the login process, the mobile wireless device sends to the VoIP system 10 an identifier associated with a WAP through which the device communicates with the VoIP system 10. For example, the dual-mode mobile device 12 provides an identifier associated with the originating WAP 14 to the VoIP system 10.

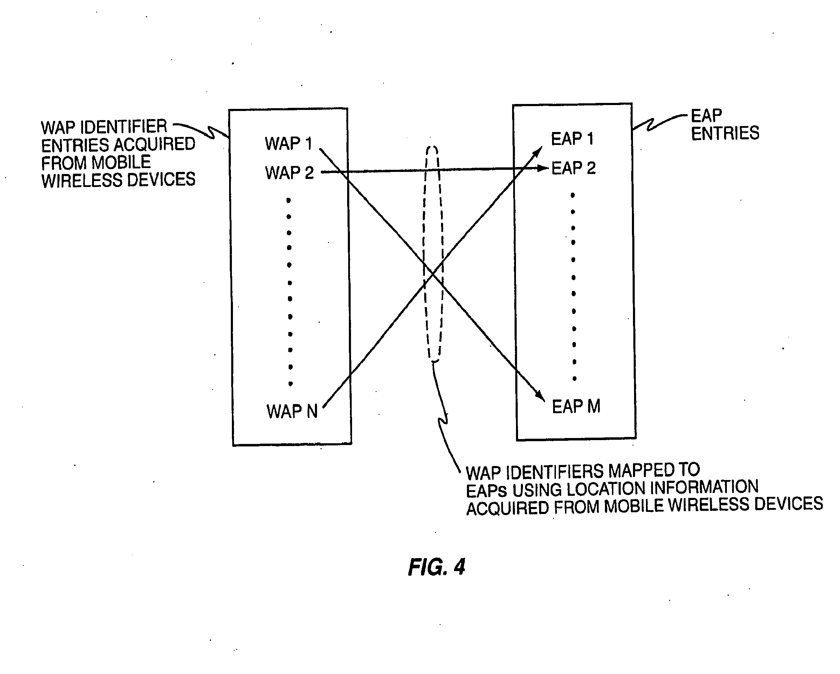

The call processing server 18 verifies whether the originating WAP 14 is known to the VoIP system 10 (Step 110). If the originating WAP 14 is known, the call processing server 18 processes the incoming call (Step 112). Conversely, if the originating WAP 14 is unknown, the VoIP system 10 acquires location information from the dual-mode mobile device 12 (Step 114). The acquired location information serves as an approximation of the location of the originating WAP 14. The database 34 is then updated with the acquired location information (Step 116). Particularly, the database 34 maps the new WAP identifier with one or more of the EAPs 30 that service a geographic area corresponding to location information associated with the newly identified WAP, as illustrated by Figure 4. Further, the VoIP system 10 may acquire location information from multiple mobile wireless devices that access the system 10 through the same WAP. The call processing server 18 may use the plurality of acquired location information to refine or pinpoint the location of a particular WAP.

The dual-mode mobile device 12 can acquire its location in various ways. For example, the dual-mode mobile device 12 may include a GPS device (not shown) for determining its location. Alternatively, the dual-mode mobile device 12 may communicate with a cellular network 38 to acquire its location. For example, a cellular radio 40 included in the dual-mode mobile device 12 can establish a radio connection to the cellular network 38. Once connected, the dual-mode mobile device 12 acquires its location by cellular network-derived techniques such as Enhanced Observed Time Difference (EOTD), assisted GPS, or Time Difference of Observed Arrival (TDOA). In yet another example, a user of the dual-mode mobile device 12 inputs location information into the device, e.g., by inputting alphanumeric characters into a keypad of the device 12 or by voice command.

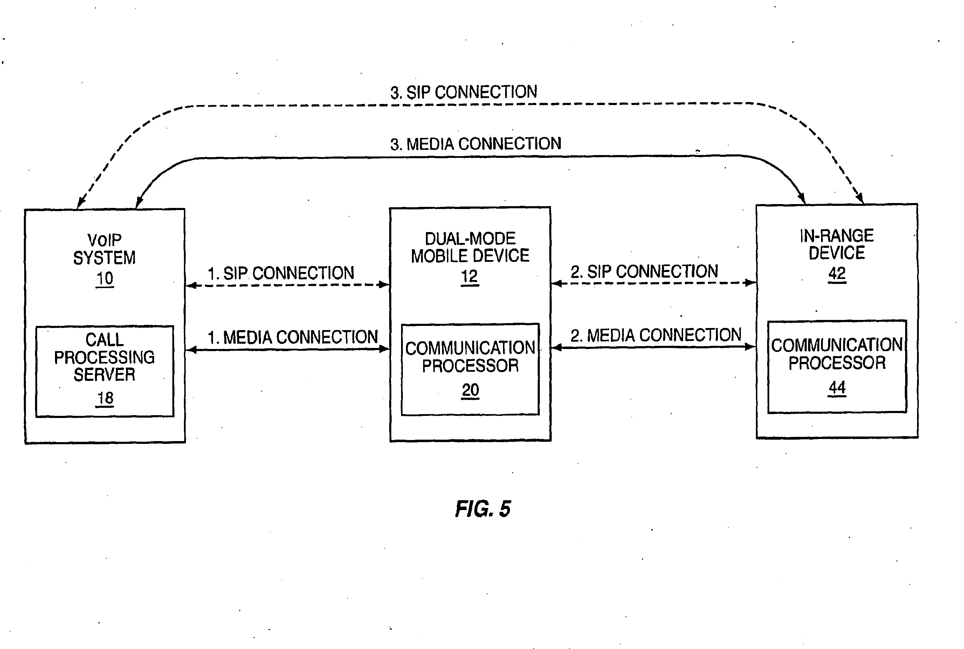

Figure 5 illustrates an embodiment where a mobile wireless device such as the dual-mode mobile device 12 or the VoIP system 10 acquires location information from an in-range device 42, i.e., a device in sufficient proximity with the mobile wireless device such that a wireless connection can be established between the devices. The location information acquired from the in-range device 42 can be used to approximate the location of the dual-mode mobile device 12 when the device 12 is unable to ascertain its own location. The dual-mode mobile device 12 either obtains location information from the in-range device 42 and provides the location information to the VoIP system 10 or initiates a connection between the VoIP system 10 and the in-range device 42.

In one example, the dual-mode mobile device 12 acquires location information from the in-range device 42 and provides it to the VoIP system 10. As such, the in-range device 42 is unknown to the VoIP system 10. During an emergency call, a SIP signaling connection is established between the communication processor 20 of the dual-mode mobile device 12 and the call processing server 18 of the VoIP system 10. In addition, a media connection is also established between the VoIP system 10 and the dual-mode mobile device 12 for exchanging information between the communication processor 20 and the call processing server 18. Upon determining that the location of the dual-mode mobile device 12 is not known or cannot be approximated, the dual-mode mobile device 12 establishes a SIP connection with a communication processor 44 of the in-range device 42. As part of the SIP connection with the in-range device 42, a media connection is also established. The dual-mode mobile device 12 then requests location information from the in-range device 42. The dual-mode mobile device 12 acquires the location information from the in-range device 42 via the media connection between the two devices. The dual-mode mobile device 12 then provides the location information to the VoIP system 10 via the media connection between the dual-mode device 12 and the VoIP system 10.

In another non-limiting example, the call processing server 18 establishes new SIP and media connections with the communication processor 44 of the in-range device 42. Using the preexisting media connection with the in-range device 42, the dual-mode mobile device 12 may acquire a device identifier from the in-range device 42, e.g., a MAC address, SSID, IP address, or phone number. The dual-mode mobile device 12 then forwards the device identifier acquired from the in-range device 42 to the VoIP system 10 via the preexisting media connection between the system 10 and the dual-mode device 12. The call processing server 18 uses the device identifier to establish new SIP and media connections between the VoIP system 10 and the in-range device 42. As such, the call processing server 18 can then acquire location information from the in-range device 42 over the newly established media channel. Those skilled in the art will appreciate that the call processing server 18 can contact one or more in-range devices while maintaining an emergency call connection with the dual-mode mobile device 12.

In yet another non-limiting example, the call processing server 18 communicates with the in-range device 42 through the dual-mode device 12. Particularly, the dual-mode device 12 routes or passes information between the VoIP system 10 and the in-range device 42 using the SIP and media connections established between the dual-mode device 12 and the VoIP system 10 and between the dual-mode device 12 and the in-range device 42. That is, the dual-mode mobile device 12 can function as a relay to establish communication between the in-range device 42 and the VoIP system 10. As such, the dual-mode mobile device 12 functions as a router or pass-through device, enabling the call processing server 18 to use the preexisting connections with the dual-mode mobile device 12 to acquire location information from the in-range device 42.

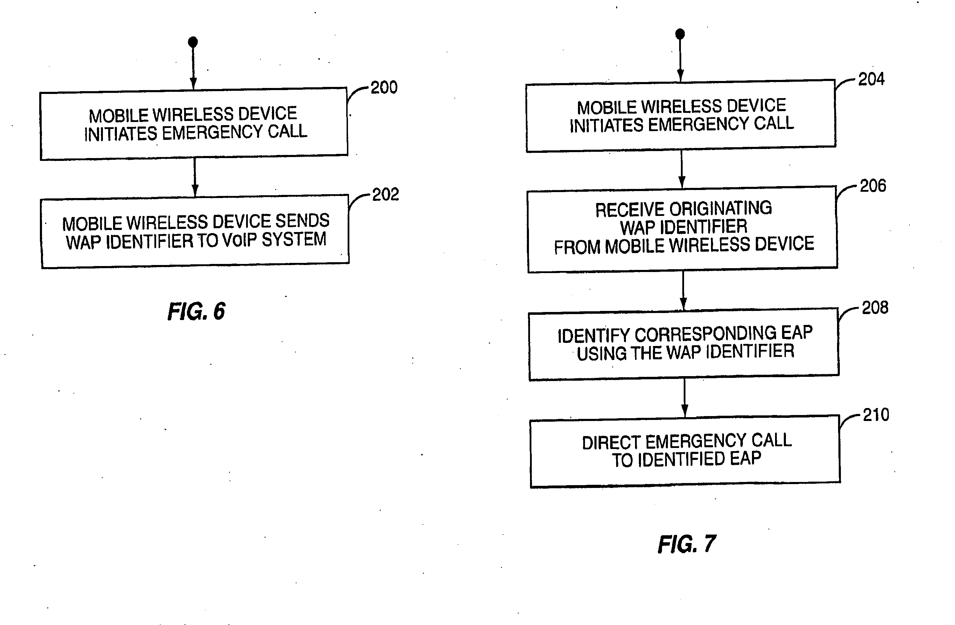

Figure 6 illustrates an embodiment of processing logic for placing an emergency call to the VoIP system 10 by a mobile wireless device via a WAP. The mobile wireless initiates an emergency call with the VoIP system 10 via a wireless broadband connection (Step 200). For example, the dual-mode mobile device 12 initiates an emergency call via a wireless broadband connection established by the WAP 14. The mobile wireless device sends to the VoIP system 10 an identifier associated with a WAP through which the device communicates with the VoIP system 10 (Step 202). For example, the dual-mode mobile device 12 provides an identifier associated with the originating WAP 14.

Figure 7 illustrates an embodiment of processing logic for routing an emergency call received by the VoIP system 10 to an appropriate EAP using the WAP/EAP relationships provided by the database 34. For example, after the dual-mode mobile device 12 is authenticated by the originating WAP 14, the device 12 initiates an emergency call via the wireless broadband connection established by the WAP 14 (Step 204). The VoIP system 10 receives from the dual-mode mobile device 12 an identifier associated with the originating WAP 14 (Step 206). The call processing server 18 then queries or mines the database 34 using the WAP identifier received from the dual-mode mobile device 12 to identify an EAP associated with the originating WAP 14 (Step 208). The call processing server 18 directs the emergency call to the identified EAP (Step 210), e.g., via the PSTN 28 or the emergency services network 32.

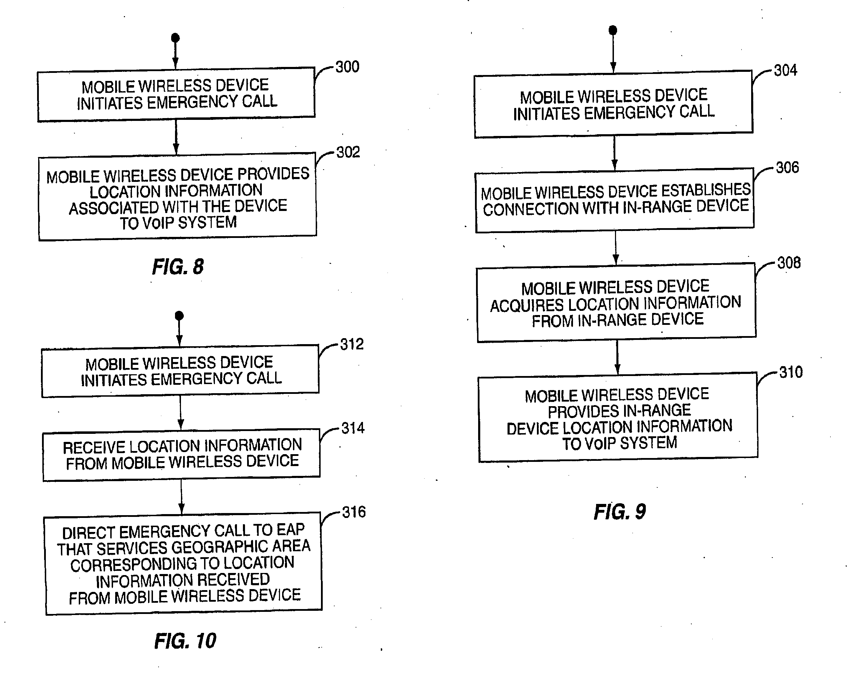

Figure 8 illustrates an embodiment of processing logic for placing an emergency call to the VoIP system 10 by a mobile wireless device that provides its location to the system 10 as part of the emergency call. The mobile wireless initiates an emergency call with the VoIP system 10 via a wireless broadband connection (Step 300). For example, the dual-mode mobile device 12 initiates an emergency call via a wireless broadband connection established by the WAP 14. The mobile wireless device provides to the VoIP system 10 location information associated with the mobile wireless device (Step 302). For example, the dual-mode mobile device 12 provides to the VoIP system 10 GPS-derived, cellular network-derived, or user-derived location information each as previously described.

Alternatively, Figure 9 illustrates an embodiment of processing logic for placing an emergency call to the VoIP system 10 by a mobile wireless device that provides the location of an in-range device to the system 10 as an approximation of the mobile wireless device's location. The mobile wireless initiates an emergency call with the VoIP system 10 via a wireless broadband connection (Step 304). If the mobile wireless device cannot identify its own location, the mobile wireless device establishes a connection with an in-range device (Step 306). For example, the communication processor 20 of the dual-mode mobile device 12 establishes SIP and media connections with the communication processor 44 of the in-range device 42. The mobile wireless device then acquires location information from the in-range device via the connection between the two devices (Step 308). The mobile wireless device provides the acquired in-range device location information to the VoIP system 10 via the connection established between the system 10 and the mobile wireless device resulting from the emergency call (Step 310).

Figure 10 illustrates an embodiment of processing logic for routing an emergency call received by the VoIP system 10 to an appropriate EAP using location information received from a mobile wireless device placing the emergency call. For example, after the dual-mode mobile device 12 is authenticated by the originating WAP 14, the device 12 places an emergency call via the wireless broadband connection established by the WAP 14 (Step 312).

In addition to receiving the emergency call, the VoIP system 10 also receives from the dual-mode mobile device 12 solicited or unsolicited location information acquired by the device 12 (Step 314). In one example, the device 12 acquires the location information after a user initiates an emergency call via the device 12, but before the device 12 places the call to the VoIP system 10. In another example, the device 12 provides location information previously acquired and stored by the device 12. Regardless of when the device 12 acquires its location, the location information may be automatically provided to the VoIP system 10 as part of the emergency call or may be provided by the device 12 upon request by the VoIP system 10. The call processing server 18 then directs the emergency call to an EAP that services the geographic area corresponding to the unsolicited location information (Step 316), e.g., via the PSTN 28 or the emergency services network 32.

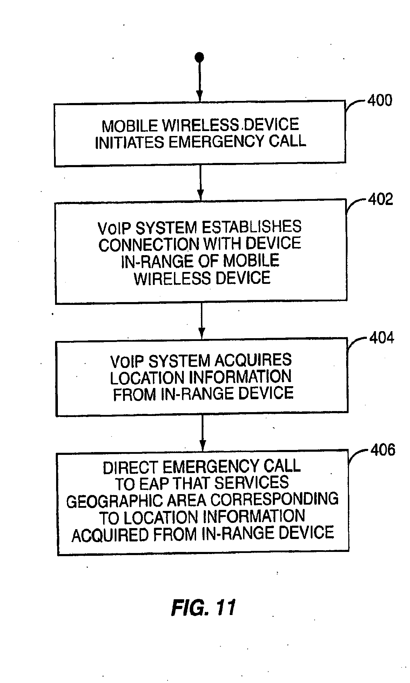

Figure 11 illustrates an embodiment of processing logic for routing an emergency call received by the VoIP system 10 to an appropriate EAP using location information received from a device in-range of a mobile wireless device placing the emergency call. According to this particular embodiment, a mobile wireless device is unable to acquire its location, but is in-range of a device that has or can obtain location information. During an emergency call, the call processing server 18 uses location information acquired from an in-range device as an approximation of the location of the mobile wireless device that placed the emergency call. For example, the processing logic "begins" with the dual-mode mobile device 12 placing an emergency call to the VoIP system 10 via a wireless broadband connection established by the originating WAP 14 (Step 400). In addition to receiving the emergency call; the VoIP system 10 also receives from the dual-mode mobile device 12 address information associated with the in-range device 42 and uses the address information to establish a connection with the in-range device 42 (Step 402). The VoIP system 10 then acquires location information from the in-range device 42 via the newly established connection between the system 10 and the in-range device 42 (Step 404). The call processing server 18 directs the emergency call to an EAP that services the geographic area corresponding to the in-range device location information (Step 406), e.g., via the PSTN 28 or the emergency services network 32.

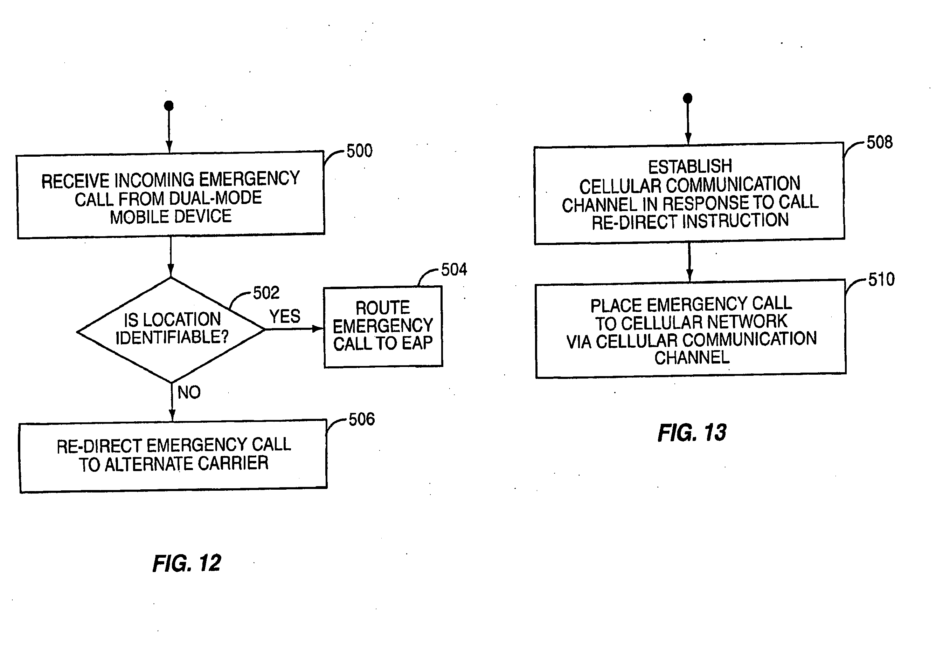

Figure 12 illustrates an embodiment of processing logic for re-directing an incoming emergency call received by the VoIP system 10 when the system 10 is unable to acquire location information associated with the emergency call. The processing logic "begins" with the VoIP system 10 receiving an emergency call placed by a mobile device capable of both cellular and wireless communication such as the dual-mode mobile device 12 (Step 500). Upon receiving the emergency call, the call processing server 18 determines whether a location associated with the emergency call is identifiable (Step 502), e.g., by one or more of the embodiments described herein. If a location is identifiable, the call processing server 18 routes the emergency call to an appropriate EAP (Step 504).

If the location is unidentifiable, i.e., the call processing server 18 is not able to determine the location or an approximate location of the dual-mode mobile device 12, the emergency call is re-directed to an alternate carrier such as a cellular carrier associated with the cellular network 38 (Step 506). In one example, the call processing server 18 provides a call redirection instruction to the dual-mode mobile device 12 after the server 18 determines that the location of the device 12 is unidentifiable, thus instructing the dual-mode device 12 to re-direct the emergency call. In another example, the dual-mode mobile device 12 recognizes that it cannot acquire its location, and in doing so, re-directs the call to the cellular network 38 without instruction from the call processing server 18.

The communication processor 20 manages emergency call redirection in the dual-mode mobile device 12. When the location of the dual-mode mobile device 12 is unidentifiable, the communication processor 20 establishes a cellular communication channel with the cellular network 38, as illustrated by Step 508 of Figure 13. In one example, the call processing server 18 of the VoIP system 10 provides a call redirection instruction to the dual-mode mobile device 12, causing the communication processor 20 to "re-direct" the emergency call by placing a subsequent emergency call over the cellular network 38. In another example, the communication processor 20 recognizes that it cannot acquire the location of the dual-mode mobile device 12, and in doing so, generates an internal call redirection instruction causing the dual-mode device 12 to "re-direct" the call without instruction from the call processing server 18. Regardless of how a call redirection instruction is generated, the communication processor 20 "re-directs" the emergency call by placing a subsequent emergency call over the cellular network 38 in response to a call redirection instruction, as illustrated by Step 510 of Figure 13. As such, the emergency call is serviced by a cellular-based system (not shown) when the location of the dual-mode mobile device 12 is unidentifiable. Those skilled in the art will appreciate that the communication processor 20 can establish a cellular communication channel while maintaining a call connection with the VoIP system 10 if the WLAN and cellular radios 36, 40 do not substantially interfere with each other.

With the above embodiments in mind, it should be understood that emergency call routing in VoIP systems as taught herein provides for a VoIP system, e.g., the system 10 that is configured to route an emergency call placed by a mobile wireless device to an EAP that services a geographic area corresponding to an approximate location of the mobile wireless device. The VoIP system is also configured to re-direct emergency calls received from dual-mode mobile devices over a cellular network when the calls lack location information sufficient for the VoIP system to route the calls to appropriate EAPs.

Thus, while the invention has been described in terms of specific embodiments, it should be understood that the present invention is not limited by the foregoing description, nor is it limited by the accompanying drawings. Instead, the present invention is limited only by the following claims.

## Claims

1. A method of routing emergency calls in a Voice-over-IP (VoIP) system (10),the method including receiving an incoming emergency call originated from a mobile wireless device connected to the VoIP system (10) through a wireless access point (WAP) (14), said method **characterized by**:
determining whether location information associated with the mobile wireless device can be acquired;
acquiring the location information if determined that the location information can be acquired and directing the emergency call to an emergency answering point (EAP) (30) that services a geographic area corresponding to the acquired location information; and
redirecting the emergency call to a cellular network (38) if determined that the location information cannot be acquired.

2. The method of claim 1, wherein directing the emergency call to the EAP (30) comprises directing the emergency call and the acquired location information to an emergency services network (32) connected to the EAP (30).

3. The method of claim 1, wherein directing the emergency call to the EAP (30) comprises:
determining an address of the EAP (30) responsive to the acquired location information; and
connecting to the EAP (30) through a public-switched telephone network (28) using the EAP address.

4. The method of claim 1, wherein acquiring the location information associated with the mobile wireless device comprises acquiring one of GPS-derived, cellular network-derived, user-derived, and in-range device-derived location information from the mobile wireless device.

5. The method of claim 1, wherein acquiring the location information associated with the mobile wireless device comprises:
requesting location information from the mobile wireless device; and
receiving the location information responsive to the request.

6. The method of claim 1, wherein acquiring the location information associated with the mobile wireless device comprises receiving unsolicited location information from the mobile wireless device during the emergency call.

7. A voice-over-IP (VoIP) system (10), including a call processing server (18) that receives an incoming emergency call originated from a mobile wireless device connected to the VoIP system (10) through a wireless access point (WAP) (14), **characterized in that** the call processing server is configured to:
determine whether location information associated with the mobile wireless device can be acquired;
acquire the location information if determined that the location information can be acquired and direct the emergency call to an emergency answering point (EAP) (30) that services a geographic area corresponding to the acquired location information; and
redirect the emergency call to a cellular network (38) or other carrier if determined that the location information cannot be acquired.

8. The VoIP system (10) of claim 7, wherein the call processing server (18) is configured to direct the emergency call to the EAP (30) by directing the emergency call and the acquired location information to an emergency services network (32) connected to the EAP (30) .

9. The VoIP system (10) of claim 7, wherein the call processing server (18) is configured to direct the emergency call to the EAP (30) by determining an address of the EAP (30) responsive to the acquired location information and connecting to the EAP (30) through a public-switched telephone network (28) using the EAP address.

10. The VoIP system (10) of claim 7, wherein the call processing server (18) is configured to acquire the location information associated with the mobile wireless device by acquiring one of GPS-derived, cellular network-derived, user-derived, and in-range device-derived location information from the mobile wireless device.

11. The VoIP system (10) of claim 7, wherein the call processing server (18) is configured to acquire the location information associated with the mobile wireless device by requesting location information from the mobile wireless device and receiving the location information responsive to the request.

12. The VoIP system (10) of claim 7, wherein the call processing server (18) is configured to acquire the location information associated with the mobile wireless device by receiving unsolicited location information from the mobile wireless device during the emergency call.

13. A mobile wireless device, including a wireless broadband radio (36) that communicates with a wireless broadband network (16) and a communication processor (20) that initiates an emergency call to a voice-over-IP (VoIP) system (10) via the wireless broadband network (16), **characterized in that** the communication processor (20) is configured to:
determine whether location information associated with the mobile wireless device can be provided to the VoIP system (10); and
place a new emergency call to a cellular network (38) if determined that the location information cannot be provided.

14. The mobile wireless device of claim 13, wherein the communication processor (20) is further configured to acquire the location information associated with the mobile wireless device from one of a GPS device, a cellular network (38), a user of the mobile wireless device, and a device (42) in-range of the mobile wireless device.

15. A mobile wireless device of claim 14, wherein the communication processor (20) is configured to acquire the location information associated with the mobile wireless device by acquiring the location information before initiating the emergency call to the VoIP system (10).

16. The mobile wireless device of claim 13, wherein the communication processor (20) is configured to place the new emergency call responsive to a call redirection instruction.

## Patentansprüche

1. Verfahren zum Leiten von Notrufen ein einem Voice-Over-IP (VoIP)-System (10), wobei das Verfahren beinhaltet Empfangen eines eingehenden Notrufs, welcher von einem Mobildrahtlosgerät stammt, das mit dem VoIP-System (10) durch einen Drahtloszugangspunkt (WAP) (14) verbunden ist, wobei das Verfahren **gekennzeichnet ist durch**:
Bestimmen, ob Ortsinformation, die mit dem Mobildrahtlosgerät assoziiert ist, erlangt werden kann;
Erlangen der Ortsinformation, wenn bestimmt wird, dass die Ortsinformation erlangt werden kann, und Lenken des Notrufs zu einem Notfallantwortpunkt (EAP) (30), welcher einem geographischen Bereich entsprechend der erlangten Ortsinformation dient; und
Weiterlenken des Notrufs zu einem Zellularnetz (30), wenn bestimmt wird, dass die Ortsinformation nicht erlangt werden kann.

2. Verfahren nach Anspruch 1, wobei Lenken des Notrufs zu dem EAP (30) umfasst Lenken des Notrufs und der erlangten Ortsinformation zu einem Notfallservicenetz (32), das mit dem EAP (30) verbunden ist.

3. Verfahren nach Anspruch 1, wobei Lenken des Notrufs zu dem EAP (30) umfasst:
Bestimmen einer Adresse des EAP (30), der ansprechend ist auf die erlangte Ortsinformation; und
Verbinden zu dem EAP (30) durch ein öffentliches Telefonnetz (Public Switched Telephone Network) (28) unter Verwendung der EAP-Adresse.

4. Verfahren nach Anspruch 1, wobei Erlangen der Ortsinformation, die assoziiert ist mit dem Mobildrahtlosgerät, Erlangen von einem von GPS-abgeleiteter, Zellularnetz-abgeleiteter, Benutzer-abgeleiteter, und In-Reichweite-Gerät-abgeleiteter Ortsinformation von dem Mobildrahtlosgerät umfasst.

5. Verfahren nach Anspruch 1, wobei Erlangen der Ortsinformation, die assoziiert ist mit dem Mobildrahtlosgerät, umfasst:
Anfragen von Ortsinformation von dem Mobildrahtlosgerät; und
Empfangen der Ortsinformation in Antwort auf die Anfrage.

6. Verfahren nach Anspruch 1, wobei Erlangen der Ortsinformation, die assoziiert ist mit dem Mobildrahtlosgerät, umfasst Empfangen nicht angeforderter Ortsinformation von dem Mobildrahtlosgerät während des Notrufs.

7. Voice-Over-IP (VoIP)-System (10), das einen Anrufverarbeitungsserver (18) beinhaltend, welcher einen eingehenden Notruf empfängt, der von einem Mobildrahtlosgerät stammt, das zu dem VoIP-System (10) durch einen Drahtloszugangspunkt (WAP) (14) verbunden ist, **dadurch gekennzeichnet, dass** der Anrufverarbeitungsserver konfiguriert ist zum:
Bestimmen, ob Ortsinformation, die assoziiert ist mit dem Mobildrahtlosgerät, erlangt werden kann;
Erlangen der Ortsinformation, wenn bestimmt wird, dass die Ortsinformation erlangt werden kann, und Lenken des Notrufs zu einem Notfallantwortpunkt (EAP) (30), welcher einem geographischen Bereich entsprechend der erlangten Ortsinformation dient; und
Weiterlenken des Notrufs zu einem Zellularnetz (38) oder einem anderen Carrier, wenn bestimmt wird, dass die Ortsinformation nicht erlangt werden kann.

8. VoIP-System (10) nach Anspruch 7, wobei der Anrufverarbeitungsserver (18) konfiguriert ist, um den Notruf zu dem EAP (30) zu lenken durch Lenken des Notrufs und der erlangten Ortsinformation zu einem Notfallservicenetz (32), das mit dem EAP (30) verbunden ist.

9. VoIP-System (10) nach Anspruch 7, wobei der Anrufverarbeitungsserver (18) konfiguriert ist, um den Notruf zu dem EAP (30) zu lenken durch Bestimmen einer Adresse des EAP (30), der ansprechend ist auf die erlangte Ortsinformation, und Verbinden zu dem EAP (30) durch ein öffentliches Telefonnetz (Public-Switched-Telephone-Network) (28) unter Verwendung der EAP-Adresse.

10. VoIP-System (10) nach Anspruch 7, wobei der Anrufverarbeitungsserver (18) konfiguriert ist, um die Ortsinformation, die assoziiert ist mit dem Mobildrahtlosgerät zu erlangen durch Erlangen von einem von GPS-abgeleiteter, Zellularnetz-abgeleiteter, Benutzer-abgeleiteter, und In-Reichweite-Gerät-abgeleiteter Ortsinformation von dem Mobildrahtlosgerät.

11. VoIP-System (10) nach Anspruch 7, wobei der Anrufverarbeitungsserver (18) konfiguriert ist, um die Ortsinformation, die assoziiert ist mit dem Mobildrahtlosgerät zu erlangen durch Anfragen von Ortsinformation von dem Mobildrahtlosgerät und Empfangen der Ortsinformation in Antwort auf die Anfrage.

12. VoIP-System (10) nach Anspruch 7, wobei der Anrufverarbeitungsserver (18) konfiguriert ist, um die Ortsinformation, die assoziiert ist mit dem Mobildrahtlosgerät, zu erlangen durch Empfangen nicht angeforderter Ortsinformation von dem Mobildrahtlosgerät während des Notrufs.

13. Mobildrahtlosgerät, das ein Drahtlosbreitbandfunkgerät (36), welches mit einem Drahtlosbreitbandnetz (16) kommuniziert und einen Kommunikationsverarbeiter (20), welcher einen Notruf zu einem Voice-Over-IP (VoIP)-System (10) über das Drahtlosbreitbandnetz (16) initiiert, beinhaltend, **dadurch gekennzeichnet, dass** der Kommunikationsverarbeiter (20) konfiguriert ist zum:
Bestimmen, ob Ortsinformation, die assoziiert ist mit dem Mobildrahtlosgerät, dem VoIP-System (10) bereitgestellt werden kann; und
Tätigen eines neuen Notrufs zu einem Zellularnetz (38), wenn bestimmt wird, dass die Ortsinformation nicht bereitgestellt werden kann.

14. Mobildrahtlosgerät nach Anspruch 13, wobei der Kommunikationsverarbeiter (20) ferner konfiguriert ist, um Ortsinformation, die assoziiert ist mit dem Mobildrahtlosgerät, von einem von einem GPS-Gerät, einem Zellularnetz (38), einem Benutzer des Mobildrahtlosgeräts, und einem Gerät (42) in Reichweite des Mobildrahtlosgeräts zu erlangen.

15. Mobildrahtlosgerät nach Anspruch 14, wobei der Kommunikationsverarbeiter (20) konfiguriert ist, um die Ortsinformation, die assoziiert ist mit dem Mobildrahtlosgerät, zu erlangen durch Erlangen der Ortsinformation vor einer Initiierung des Notrufs zu dem VoIP-System (10).

16. Mobildrahtlosgerät nach Anspruch 13, wobei der Kommunikationsverarbeiter (20) konfiguriert ist, um den neuen Notruf in Antwort auf einen Anrufweiterlenkungsbefehl zu tätigen.

## Revendications

1. Procédé d'acheminement d'appels d'urgence dans un système de voix sur IP (VoIP) (10), le procédé consistant à recevoir un appel d'urgence entrant émis par un dispositif mobile sans fil connecté au système VoIP (10) par l'intermédiaire d'un point d'accès sans fil (WAP) (14), ledit procédé étant **caractérisé par** le fait de :
déterminer si des informations de position associées au dispositif mobile sans fil peuvent être acquises ;
acquérir les informations de position s'il est déterminé que les informations de position peuvent être acquises et acheminer l'appel d'urgence vers un point de réponse aux urgences (EAP pour « Emergency Answering Point ») (30) qui dessert une zone géographique correspondant aux informations de position acquises ; et
réacheminer l'appel d'urgence vers un réseau cellulaire (38) s' il est déterminé que des informations de position ne peuvent pas être acquises.

2. Procédé selon la revendication 1, dans lequel l'acheminement de l'appel d'urgence vers l'EAP (30) consiste à acheminer l'appel d'urgence et les informations de position acquises vers un réseau de services d'urgence (32) connecté à l'EAP (30).

3. Procédé selon la revendication 1, dans lequel l'acheminement de l'appel d'urgence vers l'EAP (30) consiste à :
déterminer une adresse de l'EAP (30) en réponse aux informations de position acquises ; et
se connecter à l'EAP (30) par l'intermédiaire d'un réseau téléphonique public commuté (28) en utilisant l'adresse de l'EAP.

4. Procédé selon la revendication 1, dans lequel l'acquisition des informations de position associées au dispositif mobile sans fil consiste à acquérir l'une d'informations de position obtenues à partir d'un GPS, obtenues à partir d'un réseau cellulaire, obtenues à partir de l'utilisateur et obtenues à partir d'un dispositif situé à portée, en provenance du dispositif mobile sans fil.

5. Procédé selon la revendication 1, dans lequel l'acquisition des informations de position associées au dispositif mobile sans fil consiste à :
demander des informations de position au dispositif mobile sans fil ; et
recevoir les informations de position en réponse à la demande.

6. Procédé selon la revendication 1, dans lequel l'acquisition des informations de position associées au dispositif mobile sans fil consiste à recevoir des informations de position non sollicitées du dispositif mobile sans fil pendant l'appel d'urgence.

7. Système de voix sur IP (VoIP) (10), comportant un serveur de traitement d'appels (18) qui reçoit un appel d'urgence entrant provenant d'un dispositif mobile sans fil connecté au système VoIP (10) par l'intermédiaire d'un point d'accès sans fil (WAP) (14), **caractérisé en ce que** le serveur de traitement d'appels est configuré pour :
déterminer si des informations de position associées au dispositif mobile sans fil peuvent être acquises ;
acquérir les informations de position s'il est déterminé que les informations de position peuvent être acquises et acheminer l'appel d'urgence vers un point de réponse aux urgences (EAP) (30) qui dessert une zone géographique correspondant aux informations de position acquises ; et
réacheminer l'appel d'urgence vers un réseau cellulaire (38) ou un autre opérateur s'il est déterminé que les informations de position ne peuvent pas être acquises.

8. Système de voix sur IP (VoIP) (10) selon la revendication 7, dans lequel le serveur de traitement d'appels (18) est configuré pour acheminer l'appel d'urgence vers l'EAP (30) en acheminant l'appel d'urgence et les informations de position acquises vers un réseau de services d'urgence (32) connecté à l'EAP (30).

9. Système de voix sur IP (VoIP) (10) selon la revendication 7, dans lequel le serveur de traitement d'appels (18) est configuré pour acheminer l'appel d'urgence à l'EAP (30) en déterminant une adresse de l'EAP (30) en réponse aux informations de position acquises et en se connectant à l'EAP (30) par l'intermédiaire d'un réseau téléphonique public commuté (28) en utilisant l'adresse de l'EAP.

10. Système de voix sur IP (VoIP) (10) selon la revendication 7, dans lequel le serveur de traitement d'appels (18) est configuré pour acquérir les informations de position associées au dispositif mobile sans fil en acquérant l'une d'informations de position obtenues à partir d'un GPS, obtenues à partir d'un réseau cellulaire, obtenues à partir de l'utilisateur et obtenues à partir d'un dispositif situé à portée, en provenance du dispositif mobile sans fil.

11. Système de voix sur IP (VoIP) (10) selon la revendication 7, dans lequel le serveur de traitement d'appels (18) est configuré pour acquérir les informations de position associées au dispositif mobile sans fil en demandant des informations de position au dispositif mobile sans fil et en recevant les informations de position en réponse à la demande.

12. Système de voix sur IP (VoIP) (10) selon la revendication 7, dans lequel le serveur de traitement d'appels (18) est configuré pour acquérir les informations de position associées au dispositif mobile sans fil en recevant des informations de position non sollicitées du dispositif mobile sans fil pendant l'appel d'urgence.

13. Dispositif mobile sans fil comportant un système radio sans fil à large bande (36) qui communique avec un réseau sans fil à large bande (16) et un processeur de communication (20) qui déclenche un appel d'urgence vers un système de voix sur IP (VoIP) (10) par l'intermédiaire du réseau sans fil à large bande (16), **caractérisé en ce que** le processeur de communication (20) est configuré pour :
déterminer si les informations de position associées au dispositif mobile sans fil peuvent être fournies au système VoIP (10) ; et
émettre un nouvel appel d'urgence vers un réseau cellulaire (38) s'il est déterminé que les informations de position ne peuvent pas être fournies.

14. Dispositif mobile sans fil selon la revendication 13, dans lequel le processeur de communication (20) est en outre configuré pour acquérir les informations de position associées au dispositif mobile sans fil à partir de l'un d'un dispositif GPS, d'un réseau cellulaire (38), d'un utilisateur du dispositif mobile sans fil, et d'un dispositif (42) situé à portée du dispositif mobile sans fil.

15. Dispositif mobile sans fil selon la revendication 14, dans lequel le processeur de communication (20) est configuré pour acquérir les informations de position associées au dispositif mobile sans fil en acquérant les informations de position avant d'émettre l'appel d'urgence vers le système VoIP (10).

16. Dispositif mobile sans fil selon la revendication 13, dans lequel le processeur de communication (20) est configuré pour émettre le nouvel appel d'urgence en réponse à une instruction de réacheminement d'appel.
